# EUROPÄISCHE PATENTSCHRIFT

(11) **EP 3 146 159 B1**
(45) Veröffentlichungstag und Bekanntmachung des Hinweises auf die Patenterteilung: **21.11.2018**
(21) Anmeldenummer: 15750714.6
(22) Anmeldetag: 12.08.2015
(51) Int. Cl.: F01D 25/14, F01D 19/00

(54) **GASTURBINE MIT IN RINGSEKTOREN UNTERTEILTEM RINGKANAL**
GAS TURBINE WITH COOLING RING CHANNEL DIVIDED INTO RING SECTORS
TURBINE À GAZ DOTÉE DE CANAL DE REFROIDISSEMENT DIVISÉ EN SECTIONS ANNULAIRES

(30) Priorität: 21.08.2014 EP 14181724
(43) Veröffentlichungstag der Anmeldung: 29.03.2017
(73) Patentinhaber: Siemens Aktiengesellschaft, 80333 München (DE)
(72) Erfinder: HÜNING, Marcus, 45478 Mülheim an der Ruhr (DE); GOSSMANN, Otmar, 51766 Engelskirchen (DE); KAHLSTORF, Uwe, 45478 Mülheim a.d. Ruhr (DE)
(86) Internationale Anmeldenummer: PCT/EP2015/068570
(87) Internationale Veröffentlichungsnummer: WO 2016/026752

(56) Entgegenhaltungen:
- EP-A1- 1 505 261
- GB-A- 2 017 826
- JP-A- 2002 285 803
- US-A- 4 631 913
- US-A- 5 219 268
- US-A- 5 540 547

## Beschreibung

Die vorliegende Erfindung betrifft eine Gasturbine mit mindestens einem inneren Gehäuseteil und mindestens einem äußeren Gehäuseteil, zwischen welchen beiden Gehäuseteilen wenigstens teilweise ein Ringkanal angeordnet ist, der den bei Betrieb der Gasturbine vorherrschenden Nutzstrom des Arbeitsfluids und den Gasturbinenläufer umgibt, wobei der Ringkanal dazu ausgebildet ist, ein Kühlfluid, insbesondere Verdichterluft zu leiten.

Derartige Gasturbinen sind typischerweise als stationäre Gasturbinen aber auch als Flugzeugtriebwerke ausgebildet, welche metallische Gehäuseteile aufweisen, die eine große Wärmekapazität und damit auch ein hohes Wärmespeichervermögen haben. In den Gehäuseteilen sind typischerweise Abführöffnungen vorgesehen, welche dazu ausgebildet sind, das Kühlfluid aus dem Ringkanal zu weiteren Kühl- und Dichtaufgaben an weitere fluidtechnisch angeschlossene Abschnitte der Gasturbine zu leiten. Fernerhin dient das Kühlfluid natürlich auch zur Wärmekonditionierung, d.h. zur Kühlung der Bauteile, die den Ringkanal begrenzen.

Je nach Betriebsbedingung der Gasturbine ist es erforderlich, den Ringkanal nur mit einer verhältnismäßig geringen Menge an Kühlfluid zu beschicken. Dies führt in Folge dazu, dass sich in dem Ringkanal freie Konvektionszellen ausbilden können, die aufgrund der Temperaturunterschiede innerhalb des Ringkanals ausgebildet werden. Die freien Konvektionszellen wiederum haben einen signifikanten Einfluss auf die Gesamtströmung in dem Ringkanal, so dass sich mitunter unerwünschte Asymmetrien in der Kühlfluidverteilung in dem Ringkanal ausbilden. Somit bilden sich innerhalb des Ringkanals verstärkt örtliche Bereiche aus, welche wärmer sind als andere Bereiche. Durch die Inhomogenität in der Temperaturverteilung kann aufgrund der unterschiedlichen Materialausdehnungen der einzelnen örtlichen Bereiche die Geometrie der Gasturbine verzogen werden. Aufgrund dieses Verziehens kann ein Verlust der Achsensymmetrie der Gasturbine die Folge sein, wodurch die Spaltabstände zwischen den rotierenden und statischen Bauteilen der Gasturbine über den Querschnittsinnenumfang in Längsrichtung der Gasturbine unterschiedlich sind. So ist es bspw. bekannt, dass aufgrund der ungleichmäßigen Temperaturverteilung innerhalb der Gasturbine während des Startvorgangs eine Ovalisierung bzw. eine Verbiegung des gesamten Gehäuses auftreten kann.

Zudem sorgt die konvektive Verteilung des Kühlfluids in dem Ringkanal für unterschiedliche Kühlfluidtemperaturen über den Umfang des Ringkanals. Damit ergeben sich aber auch variable Kühlfluidtemperaturen an denjenigen Abschnitten der Gasturbine, an welchen weitere Kühlfunktionen durch das Kühlfluid zu erbringen sind, so etwa bei der Turbinenschaufelkühlung, die aus dem Ringkanal gespeist wird. Als Folge kann es erforderlich sein, dass diese Abschnitte für einen erhöhten Kühlfluidverbrauch ausgelegt werden müssen, was es technisch zu vermeiden gilt.

Dementsprechend sind die Bauteile in der Gasturbine immer auf den ungünstigsten geometrischen Fall auszulegen, wodurch eine Wirkungsgradeinbuße bzw. Kostenerhöhung hinzunehmen ist.

Derartige Probleme werden typischerweise bei den meisten Gasturbinen vernachlässigt und die Wirkungsgradeinbußen bzw. Kostenerhöhung werden hingenommen. Insbesondere wird hingenommen, dass die Spaltabstände zwischen dem inneren Gehäuseteil und den rotierenden Bauteilen größer sind als sie sein könnten, nämlich dann, wenn die Gasturbine keiner Verzerrung bzw. keiner Verbiegung unterliegen würde.

Einige Ansätze zur Vermeidung dieser Probleme sind bereits aus dem Stand der Technik bekannt, etwa aus der EP1505261A1, welche lehrt, den Ringkanal in Umfangsrichtung in Zonen zu unterteilen, welche voneinander fluidtechnisch getrennt sind.

Diese fluidtechnische Unterteilung vermag die Ausbildung von freien Konvektionszellen über den ganzen Ringkanal hinweg wenigstens teilweise zu vermindern oder sogar ganz zu verhindern. Vergleichbare technische Vorkehrungen sind etwa aus der GB 2,017,826 A, der US 5,219,268 A oder der US 4,631,913 A bekannt. Nachteilig an dieser fluidtechnischen Unterteilung des Ringkanals in Zonen ist jedoch, dass die einzelnen Ringsektoren aufwändig von außen mit Kühlfluid beschickt werden müssen und alle Sektoren jeweils eine Zuleitung erfordern. Zudem erweist sich die fluidtechnische Trennung einzelner Sektoren insofern als problematisch, als dass einzelnen Sektoren unterschiedliche Kühlleistung benötigen können. Infolgedessen sind den Sektoren unterschiedliche Mengen an Kühlfluid pro Zeiteinheit zuzuführen, wodurch sich auch der Steuerungs- und Regelaufwand erheblich vergrößert.

Aus der US 5,540,547 A ist ein Flugzeugturbinenwerk bekannt, an dessen innerem Gehäuse in Bereich der Entspannungsturbine eine Kühlvorrichtung vorgesehen ist, um den Spaltabstand zwischen Schaufelspitzen und Gehäuseinnenwandung gezielt thermisch einstellen zu können. Dazu umgibt die Kühlvorrichtung das innere Gehäuse des Triebwerks umfänglich, sodass dieses gezielt mit Kühlluft beaufschlagt werden kann. Die Kühlvorrichtung umfasst eine Verteilungsleitung, über welche Kühlluft an einzelne Luftplena übergeben wird, welche in regelmäßigen Abständen voneinander über den Umfang verteilt sind. Die Luftplena versorgen wiederum einzelne Kühlluftleitungen, über welche die Kühlluft auf die Oberfläche des Innengehäuses des Triebwerks geleitet wird. Die Kühlung der Oberfläche erfolgt durch Prallkühlung. Nach erfolgter Abgabe der Kühlluft aus den Kühlluftleitungen strömt diese in dem Ringkanal zwischen innerem und äußerem Gehäuse des Triebwerks ab und wird in die Umgebung abgegeben.

Die JP 2002-285803 A beschreibt einen mit einer Trennplatte unterteilten Zwischenraum zwischen dem inneren und äußeren Gehäuse einer Gasturbine, um mehrere in axialer Richtung eines Turbinenrotors verlaufende Kühlkanäle zu bilden. Dabei ist ein Ummantelungssegment mit einer Abstandsmessvorrichtung versehen, um den Abstand des Zwischenraumes zwischen dem Ummantelungssegment und der Spitze einer Turbinenlaufschaufel zu messen. Basierend auf dem gemessenen Abstand wird Kühlluft mit vorgegebener Temperatur und Fließrate in die Kühlkanäle gespeist.

Aus den oben genannten Umständen ergibt sich eine technische Notwendigkeit, diese Nachteile aus dem Stand der Technik zu vermeiden. Aufgabe der vorliegenden Erfindung ist es also, genau dies zu tun. Insbesondere soll eine Gasturbine vorgeschlagen werden, welche eine gleichmäßigere Kühlung der inneren Gehäuseteile und vor allem des Ringkanals auf einfache und kostengünstige Art und Weise ermöglichen kann. Zudem soll eine Ausbildung von großen Bereichen des Ringkanals durchziehende freien Konvektionszellen vermieden werden, jedoch gleichzeitig eine vorteilhafte Verteilung von Kühlfluid in dem Ringkanal erreicht werden.

Diese der Erfindung zugrundeliegenden Aufgaben werden gelöst durch eine Gasturbine gemäß Anspruch 1.

Insbesondere werden die der Erfindung zugrundeliegenden Aufgaben gelöst durch eine Gasturbine mit mindestens einem inneren Gehäuseteil und mindestens einem äußeren Gehäuseteil, zwischen welchen beiden Gehäuseteilen wenigstens teilweise ein Ringkanal angeordnet ist, der den bei Betrieb der Gasturbine vorherrschenden Nutzstrom des Arbeitsfluids und den Gasturbinenläufer umfänglich umgibt, wobei der Ringkanal dazu ausgebildet ist, ein Kühlfluid, insbesondere Verdichterluft, in Umfangsrichtung zu leiten, und wobei der Ringkanal in Umfangsrichtung durch Abtrennungen in Ringsektoren unterteilt ist, wobei in dem Ringkanal wenigstens teilweise ein Rohr vorgesehen ist, welches einzelne Ringsektoren miteinander fluidtechnisch verbindet und wobei das Rohr als Verteilrohr ausgebildet ist, welches mit wenigstens einer Kühlfluidzuleitung zur Kühlfluidzuführung fluidtechnisch verbunden ist und wenigstens eine, bevorzugt eine Vielzahl von Auslassöffnungen aufweist, welche zur Überführung des Kühlfluids aus dem Rohr in die Ringsektoren ausgebildet ist.

Diese Unterteilung des Ringkanals ist im Sinne einer fluidtechnischen Unterteilung zu verstehen, welche einen freien, also ungehinderten Fluidaustausch zwischen den einzelnen Ringsektoren verhindern kann.

Der äußere Gehäuseteil einer Gasturbine begrenzt diese typischerweise zur Umgebung hin und verhindert den Austritt von Arbeitsfluid aus der Gasturbine bei Betrieb derselben in diese Umgebung. Der innere Gehäuseteil hingegen begrenzt die Gasturbine zum Heißgasstrom hin, welcher als Arbeitsfluid für die Umsetzung von thermischer Energie in mechanische Drehenergie genutzt wird. Der innere Gehäuseteil umgibt hierbei den Heißgasstrom sowie den Gasturbinenläufer wenigstens teilweise.

Der Ringkanal ist typischerweise als Sekundärfluidplenum ausgebildet, in welchen Sekundärfluid bzw. Kühlfluid bevorratet und insbesondere in Umfangsrichtung geleitet werden kann. Bevorzugt ist das Kühlfluid Verdichterluft, kann aber auch ein anderes Fluid sein, welches entsprechend verdichtet wurde. Derartige Fluide sind bspw. Luft-Wasser-Mischungen oder auch Luft-Dampf-Mischungen.

Erfindungsgemäß ist vorgesehen, dass der zwischen dem inneren und äußeren Gehäuseteil angeordnete Ringkanal fluidtechnisch unterteilt ist, so dass einzelne Ringsektoren ausgebildet sind. Diese fluidtechnische Unterteilung vermag die Ausbildung von freien Konvektionszellen über den ganzen Ringkanal hinweg zu unterdrücken oder sogar zu verhindern. Infolgedessen kann auch der Effekt von freien Konvektionszellen auf die anderenfalls in dem Ringkanal vorherrschende Kühlfluidströmung vermindert werden. In anderen Worten ist der Einfluss der freien Konvektionszellen in dem Ringkanal geringer auf die in dem Ringkanal vorherrschende Kühlfluidströmung als ohne Unterteilung.

Weiterhin können sich in den einzelnen Ringsektoren lokale freie Konvektionszellen ausbilden, die eine schnellere Durchmischung des Kühlfluids gewährleisten können. Ebenfalls kann das Kühlfluid und damit die Kühlleistung des Kühlfluids schneller im Bereich der einzelnen Ringsektoren deponiert werden, so dass eine effizientere Kühlung durch das Kühlfluid die Folge ist. Durch die Ringsektoren wird also die durch die freie Konvektionszellen bestimmte Eigendynamik einer Temperaturschichtung lokal begrenzt, was zu einer verbesserten und gleichmäßigeren Temperaturverteilung über den Umfang des Ringkanals führt. Eine Ovalisierung bzw. Verbiegung aufgrund einer ungleichmäßigen Temperaturverteilung in Umfangsrichtung kann damit wenigstens im Bereich des Ringkanals deutlich vermindert werden.

Entsprechend eines weiteren Aspekts der Erfindung ist vorgesehen, dass in dem Ringkanal wenigstens teilweise ein Rohr vorgesehen ist, welches einzelne Ringsektoren fluidtechnisch miteinander verbindet. Diese fluidtechnische Verbindung kann den fluidtechnischen Austausch zwischen einzelnen Ringsektoren begünstigen. So kann bspw. auch gezielt Kühlfluid und damit Wärme zwischen den einzelnen Ringsektoren ausgetauscht werden. Dies erweist sich insbesondere dann als vorteilhaft, wenn während des Betriebs der Gasturbine einzelne Ringsektoren höhere Kühlleistung nachfragen als andere. In solchen Fällen kann etwa Kühlfluid aus anderen Ringsektoren in einen betreffenden Ringsektor überströmen. Gleichzeitig ist es auch möglich, dass aus den wärmeren Ringsektoren bei gleicher Kühlfluidmenge in den einzelnen Ringsektoren aufgrund des dort vorherrschenden höheren Drucks Kühlfluid in die benachbarten Ringsektoren abfließt.

Erfindungsgemäß ist weiterhin vorgesehen, dass das Rohr als Verteilrohr ausgebildet ist, welches mit wenigstens einer Kühlfluidleitung zur Kühlfluidzuführung fluidtechnisch verbunden ist und wenigstens eine, bevorzugt eine Vielzahl von Auslassöffnungen aufweist, welche zur Überführung des Kühlfluids aus dem Rohr in die Ringsektoren ausgebildet ist. Insbesondere verläuft das Rohr um den gesamten Umfang des Ringkanals und verteilt das Kühlfluid in allen Ringsektoren. Das Rohr ermöglicht somit eine vergleichmäßigte Verteilung und Beschickung der Ringsektoren mit Kühlfluid und trägt insofern wiederum zu einer Vergleichmäßigung der Temperaturverteilung über die einzelnen Ringsektoren in dem Ringkanal hinweg bei.

Die Beschickung der Ringsektoren erfolgt also über ein integriertes Rohr, so dass eine aufwändige Verbindung einzelner Ringsektoren mit einem Zuleitungssystem von außen entfallen kann. Zudem kann das Kühlfluid gezielt in einzelne Ringsektoren über das Rohr eingebracht werden. Ebenso können auch einzelne Ringsektoren vermehrt mit Kühlfluid versorgt werden, indem nämlich bereichsweise aus dem Rohr vermehrt Kühlfluid ausströmt, etwa da in einem betreffenden Ringsektor mehr Auslassöffnungen pro Länge vorgesehen sind.

Das in dem Ringkanal als Verteilrohr ausgebildete Rohr ist mit mindestens einer Kühlfluidzuleitung zur Kühlfluidzuführung fluidtechnisch verbunden ist und weist eine Mehrzahl an Auslassöffnungen auf, welche zur Überführung des Kühlfluids aus dem Rohr durch Ausströmen in den Ringkanal ausgebildet sind.

Bevorzugt ist das Kühlfluid Verdichterluft, kann aber auch ein Fluid einer externen Quelle sein, welches beispielsweise verdichtet wurde. Derartige Fluide sind etwa Luft-Wasser-Mischungen oder Luft-Dampf-Mischungen.

Ein Kerngedanke der vorliegenden Erfindung ist in der Integration eines Rohres in den durch Ringsektoren unterteilten Ringkanal zu sehen, welches mit wenigstens einer Kühlfluidzuleitung zur Kühlfluidzuführung fluidtechnisch verbunden ist und so mit Kühlfluid beschickt werden kann. Anstelle einer direkten Beschickung der Sektoren des Ringkanals mit Kühlfluid wird also zunächst das Rohr, welches in den Ringkanal integriert ist, mit dem Kühlfluid beschickt, wobei die Überführung des Kühlfluids aus dem Rohr in die Sektoren des Ringkanals durch eine Mehrzahl von Auslassöffnungen in bzw. an dem Rohr ermöglicht wird.

Während also eine Beschickung des Ringkanals mit Kühlfluid mitunter eine unvorteilhafte Strömung zur Ausbildung einer örtlich gleichmäßigen Kühlfluidverteilung ausbildet, kann durch Vorsehen des als Verteilrohr ausgebildeten Rohres das Kühlfluid weitgehend kontrolliert und gezielt in die Ringsektoren des Ringkanals, und bevorzugt an diejenigen Gehäuseteile geführt werden, die einen erhöhten Kühlluftbedarf haben. Ebenso ist es möglich, bei gleichmäßiger Verteilung der Auslassöffnungen in dem Rohr eine weitgehend vergleichmäßigte Beschickung des Ringkanals mit Kühlfluid zu erreichen, ohne etwa auch Konvektionbeeinträchtigungen berücksichtigen zu müssen. Damit kann eine weitgehend vergleichmäßigte Kühlung der betreffenden Gehäuseteile des Ringkanals erreicht werden, so dass eine Verbiegung bzw. ungleichmäßige thermische Ausdehnung einzelner Gehäuseteile der Gasturbine weitgehend vermieden werden kann. Dies wiederum hat die vorteilhafte Konsequenz, dass die beschriebenen Spaltabstände in der Gasturbine verhältnismäßig gleichmäßig ausgebildet sind, und eine Spaltoptimierung über die gesamte Umfangsform der Gehäuseteile vorgenommen werden kann. Ferner ist damit ein besonders effizienter Betrieb der Gasturbine ermöglicht.

Die Erfindung erlaubt, das Kühlfluid zunächst über den gesamten Ringkanal umfänglich zu verteilen, bevor das Kühlfluid mit den metallischen Bauteilen des Ringkanals der Gasturbine in direkten thermischen Kontakt gerät. Aufgrund der gleichmäßigeren Übertragung der Wärmemenge von den Gehäuseteilen an das Kühlfluid können Phänomene, wie etwa die Ovalisierung oder das Verbiegen des gesamten Gehäuses vermieden werden.

An dieser Stelle ist darauf hinzuweisen, dass das als Verteilrohr ausgebildete Rohr im Sinne einer Strömungsführung zu verstehen ist, welche erlaubt, eine gerichtete und umschlossene Strömung auszubilden. Das Rohr hat hierzu eine Rohrwandung, welche als Strömungsbegrenzung dient. Damit kann auch ein Rohrquerschnitt definiert werden, welcher den Fluss des Kühlfluids bestimmt. Die Geometrie des Rohrquerschnitts muss hierbei nicht rund ausgeführt sein, ist dies jedoch in einer bevorzugten Ausführungsform. Der Rohrquerschnitt kann beispielsweise auch rechteckig oder oval sein, bzw. örtlich unterschiedlich, so dass das Rohr etwa den örtlichen Anforderungen des Ringkanals angepasst sein kann. Ebenso ist es denkbar, dass das Rohr als Wellschlauch ausgebildet ist. Typischerweise umfasst das Rohr eine wärmeharte Metalllegierung.

Gemäß einer bevorzugten Ausführungsform der Erfindung ist vorgesehen, dass das Rohr über im Wesentlichen den gesamten Umfang des Ringkanals verläuft und bevorzugt die Auslassöffnungen in Umfangsrichtung voneinander gleich beabstandet sind. Die Auslassöffnungen sind typischerweise in Abständen von wenigen Zentimetern voneinander beabstandet. Ebenso können einzelne Gruppen von Auslassöffnungen vorgesehen sein, die über den Umfang des Rohres bzw. des Ringkanals verteilt sind. Aufgrund dieser Verteilung der Auslassöffnungen kann eine verhältnismäßig gleichmäßige Beschickung des Ringkanals mit Kühlluft erreicht werden, wobei auch diejenigen Gehäuseteile bevorzugt gekühlt werden können, die ohne vorsehen des Rohres einer stärkeren thermischen Aufheizung unterliegen würden.

Gemäß einer weiteren bevorzugten Ausführungsform der Erfindung ist vorgesehen, dass der Strömungsquerschnitt des Rohrs veränderlich ausgestaltet ist, wobei insbesondere der Strömungsquerschnitt der Bereiche des Rohrs, welche näher an der Kühlfluidzuleitung angeordnet sind, größer ist, als derjenigen Bereiche, welche verhältnismäßig weiter von der selben Kühlfluidzuleitung entfernt angeordnet sind. Infolgedessen kann die Strömungsgeschwindigkeit des Kühlfluids in dem Rohr variable angepasst werden, so dass die Verweildauer und Flussmenge an Kühlfluid bzw. die lokalen statischen Drücke entsprechend angepasst werden. Damit kann bspw. erreicht werden, dass in den verhältnismäßig weiter von der Kühlfluidzuleitung entfernt angeordneten Bereichen des Rohrs trotz kontinuierlichen Verlusts von Kühlfluid über die Auslassöffnungen dennoch eine ausreichende Menge an Kühlfluid vorliegt.

Gemäß einer weiteren bevorzugten Ausführungsform der erfindungsgemäßen Gasturbine ist vorgesehen, dass das Rohr mit einer Mehrzahl an Kühlfluidzuleitungen versehen ist, welche insbesondere in Umfangsrichtung voneinander gleich beabstandet sind. Ausführungsgemäß kann somit eine weitere Vergleichmäßigung der Beschickung des Rohres mit Kühlfluid erreicht werden. Zudem kann der erforderliche Rohrdurchmesser verringert werden.

Gemäß einer weiteren bevorzugten Ausführungsform der Erfindung ist vorgesehen, dass die Auslassöffnungen als Bohrungen ausgebildet sind, welche insbesondere in ihrem Durchmesser im Querschnitt nicht größer als 30 mm bemessen sind. Bevorzugt sind die Querschnitte ebenfalls nicht kleiner als 0,5 mm. Die Ausführung der Auslassöffnungen als Bohrungen ermöglicht eine besonders einfache Anfertigung des Rohres, welches die Auslassöffnungen umfasst. Sind die Bohrungen hinsichtlich ihres Querschnittes nicht größer als 30 mm im Durchmesser bemessen, kann auch eine gezielte Kühlluftströmung zu den Gehäusebauteilen des Ringkanals hin erreicht werden, wodurch ein zusätzlicher Kühleffekt mittels Prallkühlung erreicht werden kann.

Gemäß eines weiteren Aspektes der vorliegenden Erfindung ist vorgesehen, dass das Rohr einen Querschnitt senkrecht zur Umfangsrichtung aufweist, welcher nicht größer als 40 cm, insbesondere nicht größer als 25 cm im Durchmesser ist. Bevorzugt ist der Durchmesser ebenfalls nicht kleiner als 1 cm. Der Rohrquerschnitt definiert ein Rohrvolumen, welches geeignet ist, Kühlluft bei verschiedenen Drücken aufzunehmen, zu den Auslassöffnungen zu strömen, um das Kühlfluid anschließend aus den Auslassöffnungen in den Ringkanal überströmen zu lassen. Der Querschnitt des Rohres ist ausreichend klein bemessen, so dass auch bei geringen Drücken sich eine gerichtete Strömung auf Grund von Druckunterschieden in dem Rohr ausbildet.

Gemäß einer weiteren besonders bevorzugten Ausführungsform der Erfindung ist vorgesehen, dass das Rohr eine Wandung aufweist, welche senkrecht zur Umfangsrichtung nicht größer als 8 mm ist. Bevorzugt ist die Wandung nicht kleiner als 0,5 mm. Ist das Rohr nämlich aus einem metallischen Werkstoff, wie dies im Normalfall der Fall sein wird, weist das Rohr selbst eine nur geringe Wärmekapazität auf, und führt weitgehend nicht zu einer Verzerrung der Temperaturverteilung des aus den Auslassöffnungen austretenden Kühlfluids.

Gemäß einer weiteren bevorzugten Ausführungsform der Erfindung ist vorgesehen, dass das Rohr als doppelwandiges Rohr ausgebildet ist. Insofern kann das innere Volumen des Rohres von den äußeren Bereichen des Rohres thermisch entkoppelt werden, wodurch wiederum eine stärkere Vergleichmäßigung des aus dem Rohr austretenden Arbeitsfluids hinsichtlich seiner Temperatur erfolgen kann.

Weiterhin ist es möglich, dass auch das Rohr mit einer thermischen Isolierschicht versehen ist. Die thermische Isolierschicht kann sowohl innerlich als auch äußerlich aufgebracht sein. Auch diese thermische Isolierschicht dient wiederum zu einer Vergleichmäßigung der Temperaturverteilung über das Rohr hinweg, um so unterschiedliche Aufheizraten des Kühlfluids durch das Rohr selbst weitgehend zu vermeiden.

Gemäß einer besonders bevorzugten Ausführungsform der Erfindung ist vorgesehen, dass die Abtrennungen wenigstens einzelne, insbesondere alle benachbarte Ringsektoren fluiddicht voneinander trennen. Eine Temperaturübertragung durch freie Konvektionszellen, die über mehr als einen Ringsektor sich ausdehnen können, kann damit weitgehend verhindert werden. Insofern können die Temperaturschichtungen bzw. die Temperaturverteilung in einem einzelnen Ringkanal nochmals besser lokalisiert werden. Je nach Ausbildung der Ringsektoren, d.h. je nach Größe und Geometrie der Ringsektoren, kann so auf die sich einstellende Temperaturverteilung in Umfangsrichtung besonders vorteilhaft Einfluss genommen werden.

Alternativ oder auch in Weiterführung der Idee ist vorgesehen, dass wenigstens einige der Ringsektoren, insbesondere alle Ringsektoren mit einer eigenen Kühlfluidzuleitung versehen sind. Insbesondere wenn die einzelnen Ringsektoren fluiddicht gegeneinander getrennt sind, ist eine solche individuelle Kühlfluidzuleitung pro Ringsektor sehr vorteilhaft bzw. sogar erforderlich, um die Ringsektoren mit ausreichend Kühlfluid zu versorgen. Durch eine individuelle Kühlfluidzuleitung kann jeder Ringsektor auch unabhängig von den anderen Ringsektoren mit Kühlfluid versorgt werden, wobei insbesondere Ringsektoren dann mit besonders viel Kühlfluid versorgt werden können, wenn diese in einem Bereich angeordnet sind, der während des Betriebs der Gasturbine besonders viel Kühlleistung nachfragt.

Gemäß einer weiteren, sehr vorteilhaften Ausführungsform der Erfindung ist vorgesehen, dass wenigstens einzelne Abtrennungen, insbesondere alle Abtrennungen Durchgänge mit jeweils einem Querschnitt Q aufweisen. Die Abmessung eines Querschnitts betrifft hierbei eine durchschnittliche Abmessung, welche etwa als gemittelter Durchmesser berechnet werden kann. Insbesondere kann sich die Abmessung aber auch auf eine Maximalabmessung in der Querschnittsebene beziehen, etwa den Maximaldurchmesser. Durch das Vorsehen von Durchgängen in den Abtrennungen kann teilweise Kühlfluid zwischen den Ringsektoren ausgetauscht werden. Je nach Größe des Querschnitts der einzelnen Durchgänge kann so eine gezielte Überführung von Kühlfluid zwischen den einzelnen Ringsektoren erreicht werden. Hierbei müssen die einzelnen Abtrennungen der Ringsektoren nicht jeweils Durchgänge gleicher Querschnittsgröße aufweisen. Vielmehr können die einzelnen Abtrennungen unterschiedlich große Durchgänge aufweisen, so dass je nach Ort des Ringsektors in dem Ringkanal eine größere bzw. kleinere Fluidaustauschmenge mit den benachbarten Ringsektoren ausgetauscht werden kann.

Gemäß einer besonders bevorzugten Ausführungsform der Erfindung ist vorgesehen, dass wenigstens einzelne Abtrennungen, bevorzugt alle Abtrennungen als Trennbleche ausgebildet sind. Die Trennbleche werden typischerweise auch als Schottbleche bezeichnet. Da innerhalb des Ringkanals typischerweise keine großen Druckdifferenzen vorherrschen bzw. zwischen den einzelnen Ringsektoren auch eine solche nicht eingestellt werden soll, können die Abtrennungen verhältnismäßig dünnwandig ausgebildet sein. Dies wiederum erlaubt die Unterteilung des Ringkanals in Ringsektoren mithilfe einfacher und kostengünstiger Bauteile.

Gemäß einer weiteren Ausführung der Erfindung ist vorgesehen, dass die Ringsektoren in Umfangsrichtung des Ringkanals im Wesentlichen gleich lang dimensioniert sind. Gemäß dieser Ausführungsform wird die Kühlfluidverteilung in den einzelnen Ringsektoren verhältnismäßig vergleichbar erfolgen. Zudem ist es im Normalfall nicht erforderlich, die einzelnen Ringsektoren hinsichtlich ihrer Kühlfluidzuleitung spezifisch anzupassen. Bei verhältnismäßig hohen Fluidströmen kann so auch eine schnelle Vergleichmäßigung der Kühlfluidverteilung über den Ringkanal erreicht werden.

Gemäß einer weiteren bevorzugten Ausführungsform der Erfindung ist vorgesehen, dass in Umfangsrichtung des Ringkanals eine gerade Anzahl an Ringsektoren vorgesehen ist. Insbesondere sind es zwei, vier, sechs oder acht Ringsektoren. Diese Unterteilung erlaubt die Unterteilung des Ringkanals in Ringsektoren, die symmetrisch zueinander angeordnet sein können. Dies erlaubt wiederum eine verbesserte Vergleichmäßigung der Temperaturverteilung innerhalb der vier bzw. acht Ringsektoren.

Gemäß einer weiteren Ausführungsform der Erfindung ist vorgesehen, dass wenigstens eine Abtrennung im Bereich des oberen Scheitels des Ringkanals vorgesehen ist und/oder wenigstens eine Abtrennung im Bereich des unteren Scheitels des Ringkanals vorgesehen ist. Der obere Scheitel betrifft hierbei bei Aufstellung der Gasturbine den örtlich höchsten Punkt des Ringkanals, wobei der untere Scheitel den untersten Punkt betrifft. Aufgrund der ausführungsgemäßen Unterteilung kann eine Ausdehnung der freien Konvektionszellen in den jeweils anderen Symmetriebereich verhindert werden. Aufgrund der symmetrischen Anordnung der Abtrennungen können die Ringsektoren weitgehend gleichmäßig mit Kühlfluid beschickt werden, wobei die Ausbildung der freien Konvektionszellen bzw. Kühlfluidströmung ebenfalls weitgehend vergleichbar ist, soweit die bezeichneten Abtrennungen die einzigen sind.

Entsprechend einer ebenfalls bevorzugten Ausführungsform ist vorgesehen, dass wenigstens zwei Abtrennungen vorgesehen sind, welche in Umfangsrichtung des Ringkanals einander gegenüberliegend angeordnet sind und insbesondere um betragsmäßig 85° bis 95° (also etwa um n/2) gegenüber dem oberen Scheitel des Ringkanals gedreht angeordnet sind. Die Definition des oberen und unteren Scheitels soll entsprechend der vorher gehenden Ausführungsform verstanden werden.

Entsprechend einer weiteren Ausführungsform der Erfindung ist vorgesehen, dass die Abtrennungen als Haltebleche ausgebildet sind, mittels welcher das Rohr in dem Ringkanal befestigt ist. Damit weisen die Abtrennungen neben ihrer fluidtechnischen Funktion auch eine mechanische Funktion auf. Zudem sind derartige Bleche kostengünstig herzustellen und sind sehr leicht.

Nachfolgend sollen Ausführungsformen der Erfindung anhand einzelner Figuren im Detail beschrieben werden. Hierbei ist darauf hinzuweisen, dass die Figuren lediglich schematisch zu verstehen sind und eine Einschränkung der Ausführbarkeit aufgrund dieser Darstellung nicht gegeben ist.

Weiter soll darauf hingewiesen werden, dass alle technischen Merkmale mit gleichen Bezugszeichen gleiche technische Wirkung aufweisen.

Fernerhin sei darauf hingewiesen, dass alle beliebigen Kombinationen der nachfolgend dargestellten technischen Merkmale vorliegend beansprucht werden, soweit diese Kombinationen in der Lage sind, die erfindungsgemäßen Aufgaben zu lösen.

Hierbei zeigen:
- Figur 1: eine seitliche Schnittansicht in Längsrichtung durch eine Gasturbine gemäß dem Stand der Technik;
- Figur 2: eine Querschnittansicht durch einen Ringkanal in Längsrichtung entlang einer Gasturbine, wie sie aus dem Stand der Technik bekannt ist;
- Figur 3: eine seitliche Schnittansicht in Längsrichtung durch eine Ausführungsform einer Gasturbine, wie sie aus dem Stand der Technik bekannt ist;
- Figur 4: eine Querschnittsansicht durch einen Ringkanal in Längsrichtung entlang einer Gasturbine wie sie aus dem Stand der Technik bekannt ist;
- Figur 5: eine Querschnittsansicht durch einen Ringkanal in Längsrichtung entlang einer Gasturbine gemäß einer Ausführungsform der Erfindung;
- Figur 6: eine seitliche Schnittansicht in Längsrichtung durch eine Ausführungsform einer Gasturbine, welche kein Rohr aufweist und vorliegend nicht beansprucht wird.

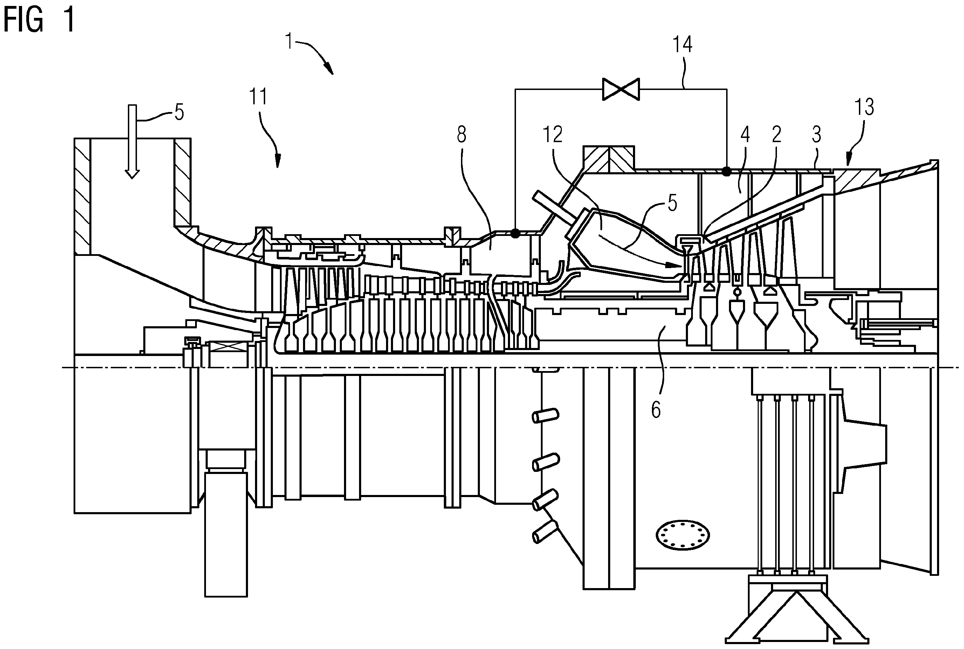

Figur 1 zeigt eine seitliche Schnittansicht in Längsrichtung durch eine Ausführungsform einer Gasturbine, wie sie aus dem Stand der Technik bekannt ist. Hierbei weist die Gasturbine einen Verdichter 11 auf, welcher Arbeitsfluid 5, vorliegend also Luft bei Betrieb ansaugt und verdichtet. Das verdichtete Arbeitsfluid 5 wird zum Großteil der Brennkammer 12 zur Verbrennung zugeführt, wobei jedoch ein geringer Anteil an verdichtetem Arbeitsfluid 5 im Sinne eines Kühlfluids 8 einen nicht weiter mit Bezugszeichen versehenem Plenum zugeführt wird, aus welchem über eine Sekundärfluidleitung 14 dieses Kühlfluid 8 einem Ringkanal 4 zugeleitet wird. Der Ringkanal 4 ist zur Umgebung hin durch ein äußeres Gehäuseteil 3 sowie nach innen zum Gasturbinenläufer 6 durch ein inneres Gehäuseteil 2 begrenzt. In Längsrichtung der Gasturbine sind zudem weitere Bauteile vorgesehen, die einen fluidtechnisch abgegrenzten Ringkanal 4 ausbilden.

Bei Betrieb der Gasturbine wird folglich in den Ringkanal 4 Arbeitsfluid eingebracht, welches je nach Betriebszustand eine größere oder kleinere Strömung in dem Ringkanal ausbilden lässt. Aus dem Ringkanal wird bspw. das Kühlfluid für weitere Kühlungen bzw. für Dichtungszwecke entnommen. Je nach Betriebszustand der Gasturbine 1 werden jedoch die Bauteile, welche den Ringkanal 4 begrenzen, mehr oder minder erwärmt. Ebenfalls können diejenigen Bauteile mehr oder minder erwärmt werden, die mittels des aus dem Ringkanal 4 abgeführten Kühlfluids 8 versorgt und gekühlt werden. In beiden Fällen steht eine ungleichmäßige Kühlwirkung wie auch eine Verbiegung bzw. Ovalisierung der Gasturbine zu befürchten, wodurch Wirkungsgrad wie weiter oben bereits erklärt eingebüßt wird.

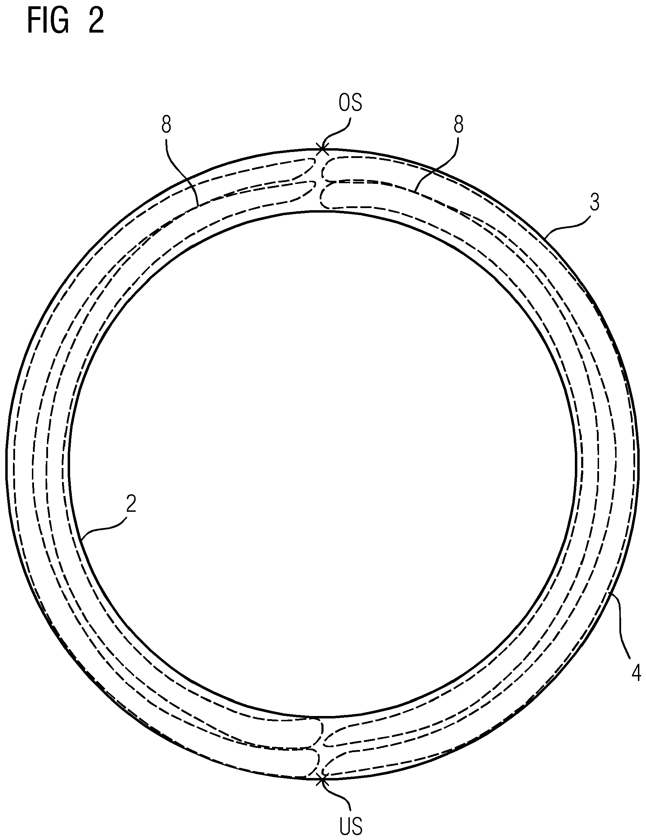

Aufgrund der ungleichmäßigen Aufheizung, wie auch mitunter aufgrund eine nicht ausreichend großen Menge an in den Ringkanal 4 eingebrachten Kühlfluids 8 können sich in dem Ringkanal 4, wie in Figur 2 gezeigt, verhältnismäßig große freie Konvektionszellen an Kühlfluid 8 ausbilden. Diese sind vorliegend gestrichelt dargestellt. Hierbei reicht eine freie Konvektionszelle von einem unteren Scheitelpunkt US des Ringkanals 4 bis zu einem oberen Scheitelpunkt OS und beeinträchtigt damit den ganzen Fluidstrom an Kühlfluid 8 in dem Ringkanal 4. Infolge der Ausbildung der freien Konvektionszellen kommt es zudem noch zu einer unvorteilhaften Temperaturverteilung innerhalb des Ringkanals vor allem dann, wenn nur eine geringe Kühlfluidmenge 8 in dem Ringkanal 4 vorliegt. Aufgrund der durch die freien Konvektionszellen hervorgerufenen Strömungsbeeinflussungen werden mitunter nicht alle Bereiche ausreichend mit einem Kühlfluid 4 vergleichbarer thermischer Konditionierung versorgt. Ebenso kann Kühlfluid 8 aus dem Ringkanal an vorbestimmten Stellen (vorliegend nicht gezeigt) entnommen werden, welches hinsichtlich seiner Temperatur über den Umfangswinkel variieren kann. Dies Alles gilt es zu vermeiden.

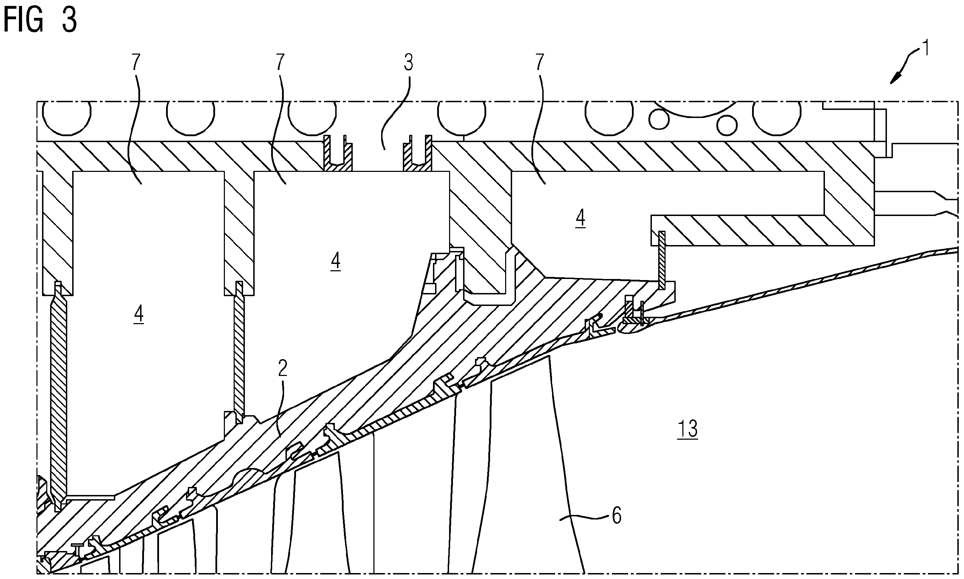

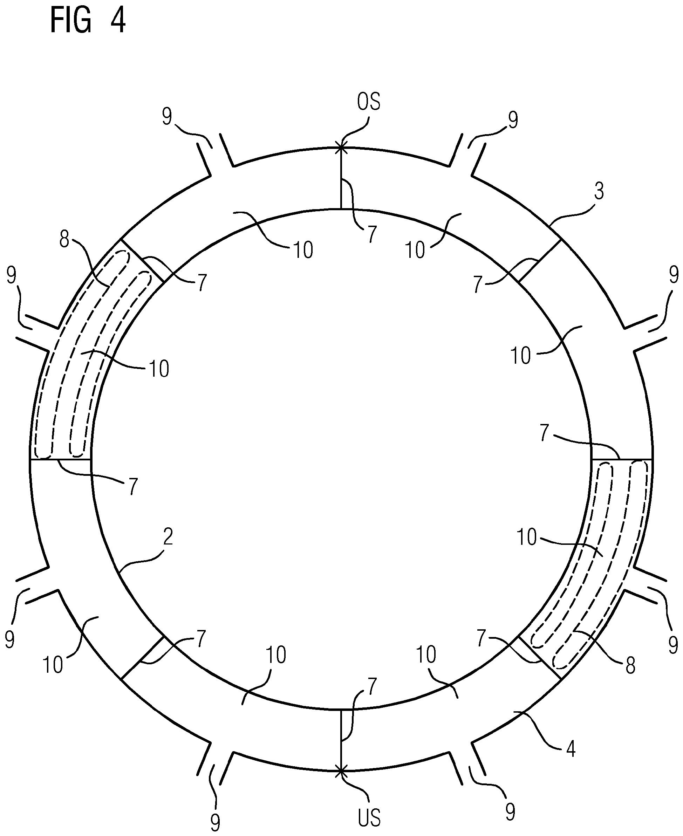

Dies kann bspw. durch die in Figur 3 gezeigte Ausführungsform erreicht werden. Hierbei zeigt Figur 3 in Längsrichtung der Gasturbine 1 eine Detailschnittansicht durch insgesamt drei Ringkanäle 4, welche jeweils durch eine Abtrennung 7 unterteilt sind. Die Abtrennungen 7 definieren nicht weiter mit Bezugszeichen dargestellte Ringsektoren 10 (jeweils einen aus der Papierebene herauskommend, und jeweils einen hinter der Papierebene liegend, s.a. Fig. 4) und ermöglichen somit die Unterbrechung bzw. Verhinderung der Ausbildung von großen freien Konvektionszellen in dem Ringkanal 4. Die Ringsektoren 10 sind hierbei insbesondere durch das äußere Gehäuseteil 3 zur Umgebung hin bzw. das innere Gehäuseteil 2 zu den drehenden Bauteilen der Entspannungsturbine 13 hin begrenzt. Da die inneren Gehäuseteile 2 aufgrund des in der Entspannungsturbine 13 entspannten Heißgasstroms schneller erwärmt werden, sind diese Bauteile auch vermehrt mit Kühlfluid zu beaufschlagen.

Figur 4 zeigt eine weitere Ausführungsform eines Ringkanals 4 einer aus dem Stand der Technik bekannten Gasturbine 1 in einer Querschnittansicht entlang der Längsrichtung der Gasturbine, welcher Ringkanal 4 durch Abtrennungen 7 jeweils gleichmäßig in einzelne Ringsektoren 10 unterteilt ist. Die einzelnen Ringsektoren 10 sind hierbei jeweils mit einer eigenen Kühlfluidzuleitung 9 versehen, über welche die einzelnen Ringsektoren mit Kühlfluid 8 versorgt werden können.

Auch in der vorliegend gezeigten Ausführungsform bilden sich einzelne freie Konvektionszellen an Kühlfluid 8 aus, welche jedoch auf die einzelnen Ringsektoren 10 beschränkt bleiben. Dadurch kann einerseits eine schnellere Durchmischung des Volumens des Ringsektors 10 erreicht werden, zudem kann eine schnellere Wärmeübertragung an das innere Gehäuseteil 2 erreicht werden, da in dem Ringsektor 10 die Strömung kleinerskalig ist. Aufgrund der Abtrennungen 7 kann so der Ringkanal 4 soweit unterteilt werden, dass weitgehend alle Bereiche verhältnismäßig gleichmäßig mit Kühlfluid versorgt werden können. Dies fördert eine gleichmäßige Temperaturverteilung insbesondere des inneren Gehäuseteils 2, wodurch eine Verziehung bzw. Ovalisierung der Gasturbine 1 weitgehend vermieden werden kann. Hierbei mag es erforderlich sein, die einzelnen Ringsektoren 10 mit jeweils unterschiedlichen Mengen an Kühlfluid 8 über die Kühlfluidzuleitungen 9 zu versorgen. Ebenso können unterschiedliche Mengen aus den jeweiligen Ringsektoren 10 wieder entnommen werden (vorliegend nicht gezeigt) .

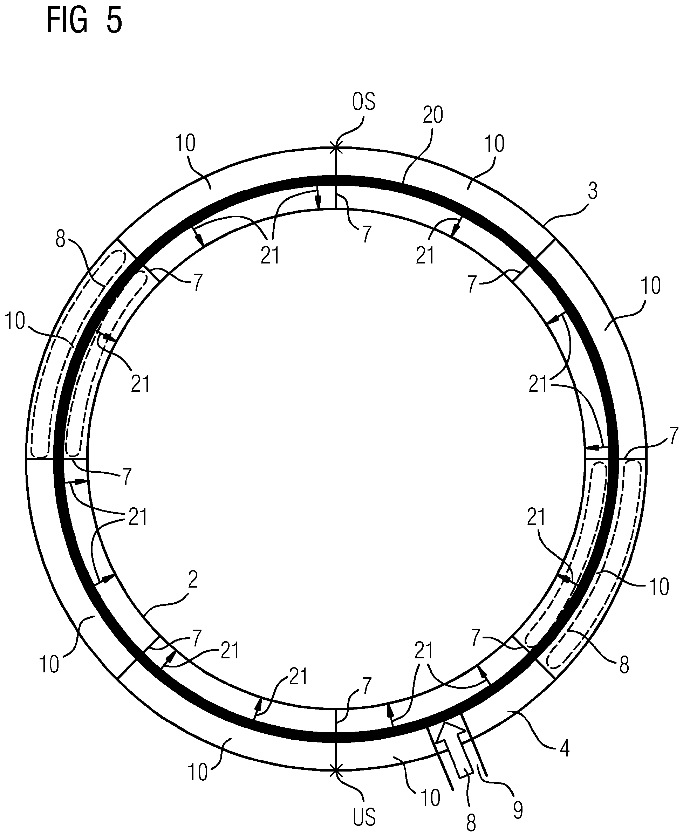

Figur 5 zeigt eine Ausführungsform der Erfindung, welche sich von der in Figur 4 gezeigten dahingehend unterscheidet, dass zur weitergehenden Vergleichmäßigung der Kühlfluideinbringung in die einzelnen Ringsektoren 10 ein als Verteilrohr ausgebildetes Rohr 20 vorgesehen ist, welches sich durch alle Ringsektoren erstreckt und über Auslassöffnungen 21 das Kühlfluid aus dem Inneren des Rohres in die jeweils einzelnen Ringsektoren 10 überführt. Das als Verteilrohr ausgebildete Rohr 20 wird selbst über eine Kühlfluidzuleitung 9 mit Kühlfluid 8 beschickt. Aufgrund des verhältnismäßig kleineren Strömungsquerschnittes des Rohrs 20 kann eine besser orientierte Strömung in dem Rohr 20 ausgebildet werden als in dem Ringkanal 4. Dadurch verteilt sich das Kühlfluid 8 in dem Rohr 20 mitunter besser und schneller. Zudem kann der Druck in dem Rohr 20 im Vergleich zum Druck in den einzelnen Ringsektoren 10 erhöht sein, wodurch die Überführung an Kühlfluid 8 in die einzelnen Ringsektoren in erster Linie durch den Druckabfall bestimmt ist, und nicht durch mögliche freie Konvektionsphänomene in den einzelnen Ringsektoren 10.

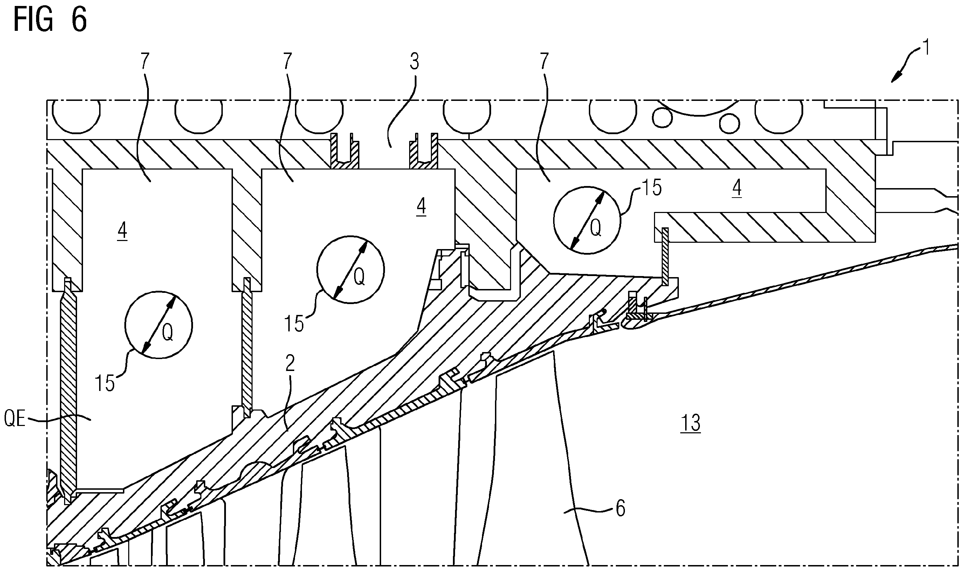

Gemäß einer weiteren Ausführungsform, welche kein Rohr 20 aufweist, ist es denkbar, wie in Figur 6 dargestellt, die einzelnen Abtrennungen 7 der Ringkanäle 4 mit jeweils einem Durchgang 15 zu versehen. Der Durchgang 15 kann bspw. als Bohrung ausgeführt sein und weist einen Querschnittsdurchmesser Q in der Querschnittsebene QE auf, welche durch die flächige Ausdehnung der Abtrennung 7 definiert ist. Über die einzelnen Durchgänge 15 können die Ringkanäle 10 jeweils miteinander in Fluidkontakt stehen, so dass ein Kühlfluidaustausch bei Bedarf ermöglicht werden kann. Je nach Dimensionierung der Größe des Durchgangs 15 kann eine größere oder kleinere Menge an Kühlfluid zwischen den benachbarten Ringsektoren 10 ausgetauscht werden und so zu einer Vergleichmäßigung der Temperaturverteilung in dem jeweiligen Ringkanal 4 beitragen.

Weitere Ausführungsformen ergeben sich aus den Unteransprüchen.

## Patentansprüche

1. Gasturbine (1) mit mindestens einem inneren Gehäuseteil (2) und mindestens einem äußeren Gehäuseteil (3), zwischen welchen beiden Gehäuseteilen (2, 3) wenigstens teilweise ein Ringkanal (4) angeordnet ist, der den bei Betrieb der Gasturbine (1) vorherrschende Nutzstrom des Arbeitsfluids (5) und den Gasturbinenläufer (6) umfänglich umgibt, wobei der Ringkanal (4) dazu ausgebildet ist, ein Kühlfluid (8), insbesondere Verdichterluft, in Umfangsrichtung zu leiten, wobei
der Ringkanal (4) in Umfangsrichtung durch als Trennbleche ausgebildete Abtrennungen fluid-technisch (7) in Ringsektoren (10) unterteilt ist, welche einen freien, ungehinderten Fluidaustausch zwischen den einzelnen Ringsektoren verhindern können,
**dadurch gekennzeichnet, dass** in dem Ringkanal (4) wenigstens teilweise ein Rohr (20) vorgesehen ist, welches einzelne Ringsektoren (10) miteinander fluidtechnisch verbindet, wobei das Rohr (20) als Verteilrohr ausgebildet ist, welches mit wenigstens einer Kühlfluidzuleitung (9) zur Kühlfluidzuführung fluidtechnisch verbunden ist und wenigstens eine, bevorzugt eine Vielzahl von Auslassöffnungen (21) aufweist, welche zur Überführung des Kühlfluids (8) aus dem Rohr (20) in die Ringsektoren (10) ausgebildet ist.

2. Gasturbine nach Anspruch 1,
**dadurch gekennzeichnet, dass** die Abtrennungen (7) wenigstens einzelne, insbesondere alle benachbarte Ringsektoren (10) fluiddicht voneinander trennen.

3. Gasturbine nach einem der vorhergehenden Ansprüche,
**dadurch gekennzeichnet, dass** wenigstens einige der Ringsektoren (10), insbesondere alle Ringsektoren (10) mit einer eigenen Kühlfluidzuleitung (9) versehen sind.

4. Gasturbine nach einem der vorhergehenden Ansprüche,
**dadurch gekennzeichnet, dass** wenigstens einzelne Abtrennungen (7), insbesondere alle Abtrennungen (7) Durchgänge (15) mit jeweils einem Querschnitt (Q) aufweisen.

5. Gasturbine nach einem der vorhergehenden Ansprüche,
**dadurch gekennzeichnet, dass** die Ringsektoren (10) in Umfangsrichtung im Wesentlichen gleich lang dimensioniert sind.

6. Gasturbine nach einem der vorhergehenden Ansprüche,
**dadurch gekennzeichnet, dass** in Umfangsrichtung eine gerade Anzahl an Ringsektoren (10) vorgesehen ist.

7. Gasturbine nach einem der vorhergehenden Ansprüche,
**dadurch gekennzeichnet, dass** wenigstens eine Abtrennung (7) im Bereich des oberen Scheitels (OS) des Ringkanals (4) vorgesehen ist und/oder wenigstens eine Abtrennung (7) im Bereich des unteren Scheitels (US) des Ringkanals (4) vorgesehen ist.

8. Gasturbine nach einem der vorhergehenden Ansprüche,
**dadurch gekennzeichnet, dass** wenigstens zwei Abtrennungen (7) vorgesehen sind, welche in Umfangsrichtung des Ringkanals (4) einander gegenüber liegend angeordnet sind, und insbesondere um betragsmäßig 85° bis 95° gegenüber dem oberen Scheitel (S) des Ringkanals (4) gedreht angeordnet sind.

9. Gasturbine nach einem der vorhergehenden Ansprüche,
**dadurch gekennzeichnet, dass** die Abtrennungen (7) als Haltebleche ausgebildet sind, mittels welcher das Rohr (20) in dem Ringkanal (4) befestigt ist.

## Claims

1. Gas turbine (1) having at least one inner casing part (2) and at least one outer casing part (3), between which both casing parts (2, 3) is at least partially arranged an annular passage (4) which circumferentially encloses the useful flow of the working fluid (5), which prevails during operation of the gas turbine (1), and the gas turbine rotor (6), wherein the annular passage (4) is designed to direct a cooling fluid (8), especially compressor air, in the circumferential direction, wherein
the annular passage (4) is fluidically subdivided into annulus sectors (10) in the circumferential direction by means of partitions (7), designed as separating plates, which can prevent a free, unhindered fluid exchange between the individual annulus sectors,
**characterized in that**
provision is made at least partially in the annular passage (4) for a pipe (20) which fluidically interconnects individual annulus sectors (10), wherein the pipe (20) is designed as a distribution pipe which is fluidically connected to at least one cooling fluid feed line (9) for cooling fluid feed and has at least one outlet opening (21), preferably a multiplicity of outlet openings (21), which is, or are, designed for the transfer of cooling fluid (8) from the pipe (20) into the annulus sectors (10).

2. Gas turbine according to Claim 1,
**characterized in that**
the partitions (7) separate at least individual adjacent annulus sectors (10), especially all the adjacent annulus sectors (10), from each other in a fluidtight manner.

3. Gas turbine according to one of the preceding claims,
**characterized in that**
at least some of the annulus sectors (10), especially all of the annulus sectors (10), are provided with a separate cooling fluid feed line (9).

4. Gas turbine according to one of the preceding claims,
**characterized in that**
at least individual partitions (7), especially all of the partitions (7), have penetrations (8) with a cross section (Q) in each case.

5. Gas turbine according to one of the preceding claims,
**characterized in that**
the annulus sectors (10) have in the main an equal length dimension in the circumferential direction.

6. Gas turbine according to one of the preceding claims,
**characterized in that**
an even number of annulus sectors (10) are provided in the circumferential direction.

7. Gas turbine according to one of the preceding claims,
**characterized in that**
at least one partition (7) is provided in the region of the upper extremity (OS) of the annular passage (4) and/or at least one partition (7) is provided in the region of the lower extremity (US) of the annular passage (4).

8. Gas turbine according to one of the preceding claims,
**characterized in that**
provision is made for at least two partitions (7) which are arranged opposite each other in the circumferential direction of the annular passage (4), and are especially arranged in a rotated manner in relation to the upper extremity (S) of the annular passage (4) by an amount of 85° to 95°.

9. Gas turbine according to one of the preceding claims,
**characterized in that**
the partitions (7) are designed as retaining plates, by means of which the pipe (20) is fastened in the annular passage (4).

## Revendications

1. Turbine (1) à gaz, ayant au moins une partie (2) intérieure d'enveloppe et au moins une partie (3) extérieure d'enveloppe, entre lesquelles deux parties (2, 3) d'enveloppe est disposé, au moins en partie, un canal (4) annulaire, qui entoure tout autour le courant utile du fluide (5) de travail, présent lorsque la turbine (1) à gaz est en fonctionnement, et le rotor (6) de la turbine à gaz, le canal (4) annulaire étant constitué pour conduire un fluide (8) de refroidissement, notamment de l'air de compresseur, dans la direction périphérique, dans laquelle
le canal (4) annulaire est, dans le direction du pourtour, subdivisé par des séparations constituées sous la forme de tôles de séparation en technique (7) fluidique en des secteurs (10) annulaires, qui peuvent empêcher un échange de fluide libre et sans obstacle entre les divers secteurs annulaires,
**caractérisée en ce que**
dans le canal (4) annulaire est prévu, au moins en partie, un tuyau (20), qui met divers secteurs (10) annulaires en communication fluidique les uns avec les autres, le tuyau (20) étant constitué en tuyau de répartition, qui communique fluidiquement avec un conduit (19) d'apport de fluide de refroidissement pour l'apport de fluide de refroidissement et qui a au moins une, de préférence une pluralité, d'ouvertures (21) de sortie constituées pour faire passer le fluide (8) de refroidissement du tuyau (20) dans les secteurs (10) annulaires.

2. Turbine à gaz suivant la revendication 1,
**caractérisée en ce que**
les séparations (7) séparent les uns des autres, d'une manière étanche au fluide, au moins certains secteurs (10) annulaires, notamment tous les secteurs (10) annulaires voisins.

3. Turbine à gaz suivant l'une des revendications précédentes,
**caractérisée en ce qu'**
au moins certains des secteurs (10) annulaires, notamment tous les secteurs (10) annulaires, sont pourvus de leur propre conduit (9) d'apport de fluide de refroidissement.

4. Turbine à gaz suivant l'une des revendications précédentes,
**caractérisée en ce qu'**
au moins certaines séparations (7), notamment toutes les séparations (7), ont des traversées (15) ayant chacune une section (Q) transversale.

5. Turbine à gaz suivant l'une des revendications précédentes,
**caractérisée en ce que**
les secteurs (10) annulaires ont, dans la direction du pourtour, sensiblement la même longueur.

6. Turbine à gaz suivant l'une des revendications précédentes,
**caractérisée en ce qu'**
il est prévu un nombre pair de secteurs (10) annulaires dans la direction du pourtour.

7. Turbine à gaz suivant l'une des revendications précédentes,
**caractérisée en ce qu'**
au moins une séparation (7) est prévue dans la région du sommet (OS) supérieur du canal (4) annulaire et/ou au moins une séparation (7) est prévue dans la région du sommet (US) inférieur du canal (4) annulaire.

8. Turbine à gaz suivant l'une des revendications précédentes,
**caractérisée en ce qu'**
il est prévu au moins deux séparations (7), qui sont dans la direction du pourtour du canal (4) annulaire à côté l'une de l'autre et notamment tournées en valeur absolue de 85° à 95° par rapport au sommet (S) supérieur du canal (4) annulaire.

9. Turbine à gaz suivant l'une des revendications précédentes,
**caractérisée en ce que**
les séparations (7) sont constituées de tôles de maintien, au moyen desquelles le tuyau (20) est fixé dans le canal (4) annulaire.
